# EUROPÄISCHE PATENTSCHRIFT

(11) **EP 1 276 591 B1**
(45) Veröffentlichungstag und Bekanntmachung des Hinweises auf die Patenterteilung: **14.01.2004**
(21) Anmeldenummer: 01931596.9
(22) Anmeldetag: 12.04.2001
(51) Int. Cl.: B23Q 16/10, B23B 29/32

(54) **WERKZEUGREVOLVER**
TOOL REVOLVER
REVOLVER PORTE-OUTIL

(30) Priorität: 27.04.2000 DE 10020605
(43) Veröffentlichungstag der Anmeldung: 22.01.2003
(73) Patentinhaber: Sauter Feinmechanik GmbH, D-72555 Metzingen (DE)
(72) Erfinder: SAHM, Detlef, 73669 Lichtenwald (DE); KIRSCH, Edgar, 72555 Metzingen (DE); QUASS, Peter, 72555 Metzingen (DE)
(74) Vertreter: Bartels, Martin Erich Arthur
(86) Internationale Anmeldenummer: PCT/EP2001/004225
(87) Internationale Veröffentlichungsnummer: WO 2001/083162

(56) Entgegenhaltungen:
- EP-A- 0 514 626
- DE-C- 4 139 543
- US-A- 3 999 264
- US-A- 5 632 075
- US-A- 5 657 523

## Beschreibung

Die Erfindung betrifft einen Werkzeugrevolver mit den Merkmalen des Oberbegriffes des Patentanspruches 1.

Bei derartigen Werkzeugrevolvem, wie sie beispielsweise aus der DE 38 14 595 A1 bekannt sind, besteht die Gefahr, daß die Positionsgenauigkeit des Revolverkopfes vermindert wird, insbesondere wenn der Werkzeugrevolver auf einer sog. Gegenspindel-Drehmaschine eingesetzt wird und bei einer Bearbeitung eines von der Gegenspindel gehaltenen Werkstückes auf den Revolverkopf eine Schnittkraft-Belastung ausgeübt wird, die im Sinne eines Abhebens des Revolverkopfes vom Gehäuse wirkt und größer ist als die Differenz zwischen der Kraft, die von dem das Verriegelungsglied bildenden oder betätigenden Kolben über den Zahnkranz des Revolverkopfes auf diesen ausgeübt wird und der in entgegengesetzter Richtung zu dieser Kraft auf den Revolverkopf wirkenden Reaktionskraft. Wenn in diesem Fall das die Axialkräfte des Revolverkopfes aufnehmende Lager ein gewisses Spiel hat, kann es zu einer Veränderung der Position des Revolverkopfes kommen, was zu entsprechenden Ungenauigkeiten bei der Bearbeitung der Werkstücke führt.

Um In möglichst einfacher Weise einen Einfluß der Schnittkraft-Belastung des Revolverkopfes bei einer sog. Rücksaitenbearbeitung auszuschließen, ist bei einem Werkzeugrevolver nach der DE 41 39 543 C1 bereits vorgeschlagen worden, einen hydraulisch retativ zum Gehäuse verschiebbaren zusätzlichen Kolben, der auf den Revolverkopf in dessen verriegettem Zustand eine in der gleichen Richtung wie die Reaktionskraft wirkende Kraft ausübt, einzusetzen, wobei die mittels des Kolbens erzeugbare Kraft nur so groß gewählt zu werden braucht, daß die entgegen der Schnittkraft-Belastung wirksamen Kräfte stets größer sind als die in Richtung der Schnittkraft-Belastung wirkenden Kräfte. Die dahingehend bekannte Lösung, die zu sehr guten Bearbeitungsgenauigkeiten führt, baut jedoch bereits aufgrund der Teilevielzahl kompliziert auf und der angesprochene zusätzliche Entlastungskolben nimmt viel Bauraum ein. Des weiteren ist das verriegelungsglied und der hydraulisch relativ zum Gehäuse verschiebbare zusätzliche Kolben hydraulisch anzusteuern, was die Hydraulikmittelversorgung aufwendig werden läßt.

Bei einem gattungsgemäßen Werkzeugrevolver gemäß der EP A-0 514 626 kann dieser auch mit Werkzeugen bestückt seln, deren Reaktionskraft bei der spanenden Bearbeitung parallel zur Dreh- oder Längsachse des Revolverkopfes wirkt und zur Abstützung dieser Kräfte ist zwischen einem Flansch, der mit einer Verzahnung versehen mit dem Zahnkranz des verschiebbaren Verriegelungsgliedes wechselwirkt, und dem drehbaren Revolverkopf ein erstes Axiallager vorgesehen und zwischen einer innenschulter des Revotvergehäuses und einer Außenschulter eines hohlzylindrischen Antriebsteils für den Revolverkopf ist ein zweites Axiallager angeordnet. Die dahingehenden beiden axialen Lagerstellen sind sowohl im verriegelten als auch im entriegelten Zustand des Revolverkopfes vorgespannt und erfahren dergestalt eine fortlaufende Druckbelastung, und zwar dadurch, daß der Revolverkopf und das hohlzylindrische Antriebsteil mittels üblicher Schrauben auf "Block" gezogen werden. Die Höhe der Vorspannung läßt sich dabei über Ringscheiben od. dgl, einstellen, die beispielsweise auf das zweite Axiailager einwirken. Somit nehmen die beiden axialen Lagerstellen vollständig die durch äußere Kräfte, welche exzentrisch in axialer Richtung am Revolverkopf angreifen, entstehenden Kippbeanspruchungen auf und verhindern dadurch, daß diese Beanspruchungen durch die Axialkraft anderer Baukornponenten des Revolverkopfes kompensiert werden müssen.

Für die vorstehend beschriebene Kraftkompensation sind bei der bekannten Lösung mithin zwei axiale Lagerstellen notwendig sowie eine entsprechend gegensinnig wirkende Verschraubung, die auf die axialen Lagerstellen einwirkt, so daß demgemäß die bekannte Lösung im Hinblick auf die Vielzahl der Bauteile einen entsprechend großen Einbauraum benötigt und teuer in der Realisierung ist

Durch die US-A-5,657,523 ist ein Werkzeugrevolver bekannt, nach dem Merkmale des kennzeichnenden Teils des Patentanspruches 1 aufgezeigt sind. So weist diese bekannte Lösung gleichfalls die Möglichkeit auf, das Verriegelungsglied zum Lösen seiner den Revolverkopf verriegelnden Stellung auf seiner die Verzahnung aufweisenden Seite mit einem weiteren Fluiddruck in einem weiteren Druckraum zu beaufschlagen, wobei gleichzeitig der auf der gegenüberliegenden Seite des Verciegelungsgliedes angreifende Fluiddruck im ersten Druckraum entfällt Der im ersten Druckraum herrschende Fluiddruck zum Verriegeln der Verzahnungen über das Verriegelungsglied bei drucklos gehaltenem weiteren Druckraum auf der gegenüberliegenden Seite des Verriegelungsgliedes wirkt auf der gegenüberliegenden Seite zusätzlich auf einen weiteren Verschiebekolben ein, der ein erstes Axiallager des drehbaren Revolverkopfes dergestalt druckbeaufschtagt. Die dahingehende Axiallagerstelle ist weit nach hinten in das Gehäuse des Revolverkopfes hineinverlegt, was die Bearbeitungsgenauigkeit unter der Schnittkraftbelastung des Revolverkopfes beeinträchtigt, da die auftretenden Kippbeanspruchungen dann nicht sicher beherrschbar sind. Darüber hinaus benötigt die bekannte Lösung zwei gleichzeitig unter einem Druck beaufschlagbare Verschiebekofben, was die bekannte Lösung konstruktiv groß aufbauen läßt und bei Entriegeln der Verzahnung über das Verriegelungsglied ist der zweite Verschiebekolben und mithin die axiale Lagerstelle drucklos gehalten, was zu den bereits beschriebenen Nachteilen führt. Des weiteren ist eine zweite axiale Lagerstelle durch eine Gleitlagerung an der Stirnselte der bekannten Vorrichtung realisiert, wo über diese der drehbare Revolverkopf an den feststehenden Gehäuseteilen geführt und dergestalt abgestützt ist.

Ausgehend von diesem Stand der Technik liegt der Erfindung die Aufgabe zugrunde, die bekannte gattungsgemäße Lösung derart fortzubilden, daß mit möglichst wenig Bauteilen und Einbauraum sparend in weiter vereinfachter Weise ein negativer Einfluß der Schnittkraft-Belastung des Revolverkopfes, insbesondere bei einer sog. Rückseitenbearbeitung, ausgeschlossen ist. Diese Aufgabe löst ein Werkzeugrevolver mit den Merkmalen des Anspruches 1.

Dadurch, daß gemäß dem kennzeichnenden Teil des Patentanspruches 1 für die Lagerung des drehbaren Revolverkopfes nur eine einzige axiale Lagerstelle notwendig ist und das Verriegelungsglied zum Lösen seiner den Revolverkopf verriegelnden Stellung auf seiner die Verzahnung aufweisenden Seite mit einem weiteren Fluiddruck in einem weiteren Druckraum beaufschlagbar ist, daß gleichzeitig der auf der gegenüberliegenden Seite des Verriegelungsgliedes angreifende Fluiddrudc im ersten Druckraum entfällt, und daß die beiden Druckräume durch das Verriegelungsglied voneinander getrennt sind, sind auf kleinstem Bauraum mit wenig Bauteilen alle wichtigen Funktionen zusammengefaßt, die derart in einfacher Weise einen die Bearbeitungsgenauigkeit schädigenden Einfluß der Schnittkraft-Belastung des Revolverkopfes, insbesondere bei einer sog. Rückseitenbearbeitung, ausschließen. Dadurch, daß das hydraulische Medium für einen Verriegelungsvorgang der Zahnkränze miteinander unmittelbar sowohl am Verriegelungsglied als auch an dem Verbindungsteil angreift wird über das Verbindungsteil der Revolverkopf entgegen der Wirkung des Verriegelungsgliedes gezogen und derart die axiale Lagerstelle zwischen Revolverkopf und Gehäuse belastet, wobei die beanspruchte Lagerlösung mit nur einem Axiallager auskommt.

Wird die Verriegelung für eine Drehbewegung des Revolverkopfes gelöst, insbesondere indem ein weiterer hydraulischer Fluiddruck nunmehr im Bereich der Verriegelungsverzahnungen angreift und der Fluidraum zwischen Verriegelungsglied und Verbindungsteil drucklos gehalten ist, ist wiederum eine "ziehende Belastung" auf die axiale Lagerstelle derart erreicht, daß über den anstehenden Fluiddruck der Revolverkopf mit dem Verbindungsteil eine Kraftkomponente in Richtung zum.Gehäuse hin erfährt und dergestalt die axiale Lagerstelle, insbesondere in Form eines Nadellagers, druckbelastet ist. In jedem Fall wird also die axiale Lagerstelle zwischen Revolverkopf und Gehäuse in "ziehender Weise" über das Verriegelungsglied mit einer Druckkraft versehen, so daß mit nur einer axialen Lagerstelle alle auftretenden Beanspruchungen aufgenommen werden können. Gegenüber einer Mehrfachlageranordnung ist dies ausgesprochen kostengünstig und wartungsfreundlich. Insbesondere läßt sich bei einem etwaigen Versagen das Lager an der axialen Lagerstelle einfach tauschen, da die axiale Lagerstelle montagefreundlich unmittelbar zwischen Revolverkopf und Gehäuse an der Stirnseite des Werkzeugrevolvers angeordnet ist.

Bei einer bevorzugten Ausführungsform des erfindungsgemäßen Werkzeugrevolvers weist das Verbindungsteil parallel zur Verschieberichtung des Verriegelungsteils eine Anlagefläche für die Anlage mit dem Verriegelungsteil in jeder Verschiebestellung desselben auf. Hierdurch ist das Verriegelungsteil über seinen gesamten möglichen Verfahrweg auf der einen Seite über das Gehäuse und auf der anderen Seite über das Verbindungsteil abgestützt.

Bei einer weiteren bevorzugten Ausführungsform des erfindungsgemäßen Werkzeugrevolvers wirkt das Verbindungsteil für die Drehbewegung des Revolverkopfes mit einem Antriebsteil zusammen, das von einem im Gehäuse gelagerten Antrieb antreibbar ist. Besonders platzsparend ist es, hierbei einen Schneckentrieb vorzusehen.

Bei einer weiteren bevorzugten Ausführungsform des erfindungsgemäßen Werkzeugrevolvers ist zwischen den Gehäuseteilen mit dem Zahnkranz und Teilen des Revolverkopfes ein Radiallager angeordnet, wobei diese Teile des Revolverkopfes zumindest teilweise das Verbindungsteil übergreifen. Hierdurch ist zum einen eine sichere Abstützung des Revolverkopfes am Verbindungsteil erreicht und im Bereich der axialen Lagerstelle läßt sich zum anderen gut zugänglich das für die Drehbewegung des Revolverkopfes benötigte Radiallager schneller aufnehmen.

Vorteilhafte Weiterbildungen sind Gegenstand der sonstigen Unteransprüche.

Im folgenden ist die Erfindung anhand eines in der Zeichnung dargestellten Ausführungsbeispiels im einzelnen erläutert.
- Fig.1: zeigt eine schematische Ansicht des Ausführungsbeispiels;
- Fig.2: zeigt einen unvollständig dargestellten Längsschnitt des Ausführungsbeispiels.

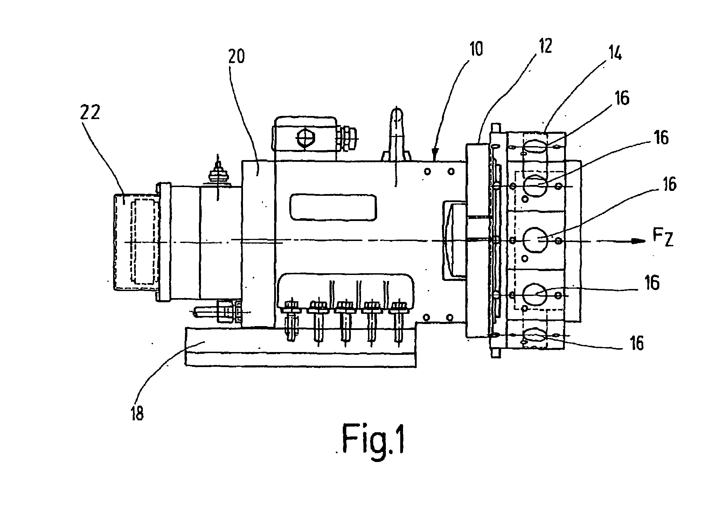

Ein als Ganzes mit 10 bezeichneter Werkzeugrevolver, der, sofern er bei einer Gegenspindel-Drehmaschine Anwendung finden sollte, auch für eine sog. Rückseitenbearbeitung geeignet wäre, weist einen Revolverkopf 12 auf, an dem in bekannter Weise eine Werkzeugscheibe 14 lösbar befestigt ist, die mindestens für die Aufnahme eines Werkzeugmoduls (nicht dargestellt) mit entsprechenden Aufnahmeöffnungen 16, die normiert sind, versehen ist. Mit einem dahingehenden Werkzeugmodul läßt sich auch eine sog. Rückseitenbearbeitung eines von einer Gegenspindel einer Werkzeugmaschine (nicht dargestellt) getragenen Werkstückes (nicht dargestellt) vornehmen. Die insbesondere bei der Rückseitenbearbeitung auftretende Schnittkraft-Belastung ist in Fig.1 durch den Pfeil FZ angedeutet. Der Werkzeugrevolver 10 weist weiterhin ein beispielsweise auf einem Schlitten 18 der Gegenspindel-Drehmaschine festzuspannendes Gehäuse 20 auf. Für den Antrieb des Revolverkopfes 12 dient vorzugsweise ein Elektromotor 22, beispielsweise in Form eines Servomotors od.dgl..

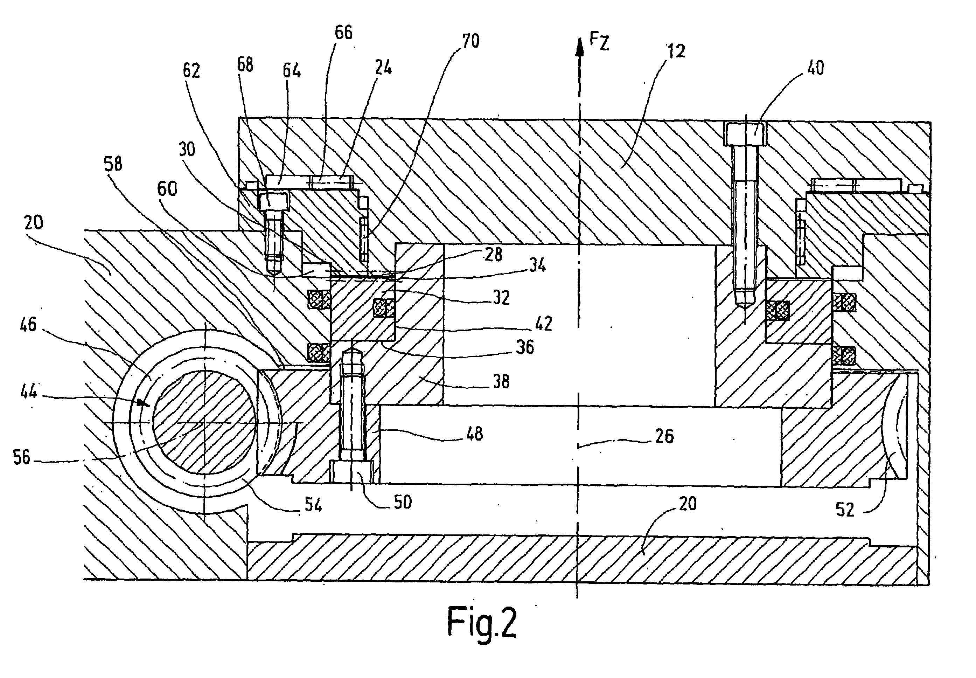

Der besseren Darstellung wegen ist in der Fig.2 die Werkzeugscheibe 14 weggelassen und nur der mit ihm verbundene Revolverkopf 12 dargestellt. Der Revolverkopf 12 ist über eine axiale Lagerstelle 24 relativ zu dem Gehäuse 20 drehbar geführt. Der Revolverkopf 12 weist auf seiner dem Gehäuseinnern zugekehrten Seite einen zu der Drehachse 26 der Werkzeugscheibe 14 konzentrischen Zahnkranz 28 mit radial verlaufenden Zähnen auf, die in wählbaren Drehstellungen des Revolverkopfes 12, der fest mit der Werkzeugscheibe 14 verbunden ist, mit den Zähnen eines Zahnkranzes 30 des Gehäuses 20 fluchten. Des weiteren weist der Werkzeugrevolver 10 ein in Richtung der Drehachse 26 des Revolverkopfes 12 ein unter einem Fluiddruck verschiebbares Verriegelungsglied 32 mit einem Zahnkranz 34 auf. Die radial angeordneten Zähne des Zahnkranzes 34 erzeugen unter der Wirkung des Fluiddruckes in der Verriegelungsstellung eine Festlegekraft und greifen sowohl in den Zahnkranz 28 des Revolverkopfes 12 ein als auch in den Zahnkranz 30 des Gehäuses 20. In der Fig.2 ist die Anordnung in der entriegelten Stellung dargestellt und die Verzahnungen in Blickrichtung auf die Fig.2 gesehen nur in der linken Bildhälfte über Strichpunktlinien andeutungsweise wiedergegeben. Ansonsten ist die dahingehende Verriegelungsanordnung vorzugsweise realisiert über sog. Hirth-Verzahnungen, wie sie bereits in der DE 41 39 543 C1 offenbart sind, so daß an dieser Stelle hierauf nicht mehr näher eingegangen wird.

Für einen Verriegelungsvorgang zum Festlegen des Revolverkopfes 12 in vorgebbaren Drehstellungen entlang seiner Drehachse 26 wird über eine nicht näher dargestellte Zuführleitung ein unter Druck stehendes hydraulisches Medium in die Ringkammer 36 eingebracht und unter dem anstehenden Fluiddruck verschiebt sich das Verriegelungsglied 32 in Blickrichtung auf die Fig.2 gesehen von seiner unteren gezeigten Stellung in eine obere, nicht näher dargestellte Position, bei der die angesprochenen Verzahnungen in Eingriff miteinander sind. Der in der Ringkammer 36 anstehende Fluiddruck wirkt jedoch nicht nur nach oben und mithin auf die angesprochenen Verzahnungen, sondern auch in entgegengesetzter Richtung im Sinne einer Reaktionskraft auf ein Verbindungsteil 38, das über eine Schraubverbindung 40 fest mit dem Revolverkopf 12 verbunden ist.

Die dahingehende axiale Reaktionskraft, die der über das Verriegelungsglied 32 ausgeübten axialen Kraft auf die Zahnkränze 28, 30 und 34 entgegenwirkt, drückt den Revolverkopf 12 entgegen der Kraft FZ in die entgegengesetzte Richtung nach unten und belastet derart die axiale Lagerstelle 24 mit einer entsprechenden Druckkraft. Des weiteren wird die nur als Strichlinie dargestellte Ringkammer 36 von den einander benachbarten Stirnseiten von Verriegelungsglied 32 und Verbindungsteil 38 begrenzt. Des weiteren weist das Verbindungsteil 38 parallel zur Verschieberichtung des Verriegelungsglied 32 entlang der Drehachse 26 eine ringförmige Anlagefläche 42 für die Anlage mit dem Verriegelungsteil 32 in jeder Verschiebestellung desselben auf.

Das Verbindungsteil 38 wirkt für die Drehbewegung des Revolverkopfes 12 mit einem als Ganzes mit 44 bezeichneten Antriebsteil zusammen, das von einem im Gehäuse 20 gelagerten Antrieb 22,46 antreibbar ist. Dabei weist das Antriebsteil 44 einen mit dem Verbindungsteil 38 fest verbundenen Antriebsring 48 auf, wobei die dahingehende feste Verbindung über eine Schraubverbindung 50 hergestellt ist. Der angesprochene Antriebsring 48 ist außenumfangsseitig mit einer Verzahnung 52 versehen, die mit der Antriebsverzahnung 54 des Antriebes 46 im Gehäuse 20 kämmt. Vorzugsweise weist der Antrieb 46 gemäß der Darstellung nach der Fig.2 ein Schnekkenrad auf, das in einer Antriebsachse 56 senkrecht zur Drehachse 26 des Revolverkopfes 12 antreibbar mit seiner Antriebsverzahnung 54 mit der korrespondierenden Schneckenverzahnung des Antriebsringes 48 kämmt.

Der Antriebsring 48 ist in der Art eines Stufenringes ausgebildet und weist, um die Kraftaufnahmebewegung zwischen den verschiebbaren Teilen nicht zu behindern, entlang seiner Oberseite einen axialen Abstand 58 zu dem Gehäuse 20 auf. Des weiteren umfaßt die Stufe des Antriebsringes 48 die Unterseite des Verbindungsteils 38. Mithin ist der Antriebsring 48 über die Schraubverbindung 50 fester Bestandteil des Verbindungsteils 38 und die kämmenden Zahnbestandteile des Schneckentriebes lassen in Richtung der Drehachse 26 ein geringes Verschiebespiel zu, um die "ziehenden" Abstützungskräfte für die axiale Lagerstelle 24 aufnehmen zu können, ohne hierdurch durch feststehende Gehäuseteile 20 oder Verzahnungsbestandteile des Antriebes 46 behindert zu sein. Das Verriegelungsglied 32 ist zum Lösen seiner den Revolverkopf 12 verriegelnden Stellung auf seiner die Verzahnung 34 aufweisenden Seite mit einem weiteren Fluiddruck beaufschlagbar. Hierfür weist der Zahnkranz 34 des Verriegelungsgliedes 32 in Richtung der Lagerstelle 24 eine weitere Ringkammer 60 auf, die über eine nicht näher dargestellte Zuführleitung mit einem unter Druck stehenden hydraulischen Medium beaufschlagbar ist.

Sofern die erste Ringkammer 36 drucklos gehalten ist, wird unter dem Fluiddruck in der weiteren Ringkammer 60 in Blickrichtung auf die Fig.2 gesehen das Verriegelungsglied 32 in Richtung der ersten Ringkammer 36 nach unten gedrückt. Der Zahnkranz 30 gerät dabei außer Wirk-Eingriff mit dem Zahnkranz 34 und der Revolverkopf 12 kann sich in eine vorgebbare Stellung um seine Drehachse 26 bewegen. Der in der weiteren Ringkammer 60 ausgeübte Fluiddruck drückt das Verriegelungsglied 32 in Richtung des Verbindungsteils 38 und übt derart auf das Verbindungsteil 38 eine Kraft auf den Revolverkopf 12 aus, daß auch in der entriegelnden Stellung die axiale Lagerstelle 24 ausschließlich mit einer Druckkraft belastet ist.

Sowohl in der verriegelten als auch in der entriegelten Stellung wird also die axiale Lagerstelle 24 durch eine Druckkraft zwischen Revolverkopf 12 und feststehenden Gehäuseteilen 62 des Gehäuses 20 beaufschlagt. Somit lassen sich mit nur einem Axiallager 66, vorzugsweise in Form eines Nadellagers, das in einer Innenausnehmung 64 des Revolverkopfes 1-2 geführt ist, die zur Oberseite der feststehenden Gehäuseteile 62 hin öffnet, sämtliche relevanten, entgegen der Schnittkraft FZ wirkenden Druckkräfte aufnehmen. Auf zusätzliche weitere Axiallagerstellen kann mithin verzichtet werden, so daß die dahingehende Anordnung sich sehr kostengünstig realisieren läßt. Zum anderen ist die in dem Revolverkopf 12 integrierte axiale Lagerstelle 24 nach Lösen der Schraubverbindung 40 von außen her gut zugänglich, so daß Wartungsarbeiten einfach und schnell vonstatten gehen können, insbesondere falls das Nadellager 66 verschlissen und gegen ein neues auszutauschen ist.

Die feststehenden Gehäuseteile 62 sind über eine weitere Schraubverbindung 68 an dem Gehäuse 20 festgelegt und umgreifen in der Art eines Anlagewinkels eine Stufenkante des Gehäuses 30. Ferner weisen die feststehenden Gehäuseteile 62 auf ihrer in Blickrichtung auf die Fig.2 gesehen unteren Seite die Verzahnungen in Form des Zahnkranzes 30 auf und begrenzen zusammen mit dem sonstigen Gehäuse 20 zumindest teilweise die weitere Ringkammer 60. Des weiteren ist zwischen den Gehäuseteilen 62 und Teilen des Revolverkopfes 12 ein Radiallager 70 angeordnet, wobei die angesprochenen Teile des Revolverkopfes 12 zumindest teilweise das Verbindungsteil 38 seitlich übergreifen und derart eine Führungsanlagefläche ausbilden. Über das Radiallager 70 lassen sich in üblicher Weise die bei der Schwenkbewegung des Revolverkopfes 12 auftretenden Beanspruchungen aufnehmen. Im übrigen baut die beschriebene Werkzeugrevolveranordnung, wie dies die Fig.2 deutlich macht, insbesondere in Blickrichtung entlang der Drehachse 26 nur sehr klein auf, so daß die erfindungsgemäße Revolverkopfanordnung sich platzsparend an Werkzeugrevolvern 10 unterbringen läßt.

Die Zahnhöhe des Zahnkranzes 28 des Revolverkopfes 12 kann etwas größer gewählt werden als die zugeordnete Verzahnung des Zahnkranzes 30 des Gehäuses 20. Trotz dieses Zahnhöhenunterschiedes sind in der Verriegelungsstellung die angesprochenen Verzahnungen sicher im Eingriff miteinander. Kommt es jedoch beispielsweise infolge einer ungewollten Kollision dazu, daß das Verriegelungsglied 32 ausgerückt wird, dann bleiben die revolverkopfseitigen Verzahnungen in Eingriff miteinander und die Entriegelung findet nur im Hinblick auf die gehäuseseitige Verzahnung 30 statt. Somit kann sich der Revolverkopf frei drehen und nimmt dabei in der.Art einer Schleppverbindung über die im Eingriff verbleibenden Verzahnungen 28 und 34 das Verriegelungsglied 32 mit. Nach einer solchen, Verdrehung infolge einer Kollision braucht deshalb für eine weitere Bearbeitung nur der Revolverkopf 12 mittels des Antriebsmotors 22 und beispielsweise unter Einbeziehen der Angaben eines Drehstellungsgebers od.dgl. in die ursprüngliche Lage zurückgedreht zu werden, weil sich die Lage des Revolverkopfes 12 bezüglich des Verriegelungsgliedes 32 nicht geändert hat. Mit der erfindungsgemäßen Lösung wird also erreicht, daß das Lager 24 immer druckbelastet ist, egal welche der gezeigten Druckräume 60 oder 36 mit Fluiddruck beaufschlagt sind.

## Patentansprüche

1. Werkzeugrevolver mit einem von einem Gehäuse (20) getragenen und relativ zu diesem Gehäuse (20) über eine axiale Lagerstelle (24) drehbaren Revolverkopf (12), welcher auf der dem Gehäuseinnem zugekehrten Seite einen zu seiner Drehachse (26) konzentrischen Zahnkranz (28) mit radial verlaufenden Zähnen aufweist, die in wählbaren Drehstellungen des Revolverkopfes (12) mit den Zähnen eines Zahnkranzes (30) des Gehäuses (20) fluchten, und mit einem in Richtung der Drehachse (26) des Revolverkopfes (12) mittels eines unter einem Fluiddruck verschiebbaren Verrlegelungsgliedes (32) mit einem Zahnkranz (34), dessen radiale Zähne in der Verriegelungsstellung mit der über den Fluiddruck erzeugten Kraft sowohl in den Zahnkranz (28) des Revolverkopfes (12) als auch in den Zahnkranz (30) des Gehäuses (20) eingreifen, wobei der hydraulische Druck gleichzeitig den Revolverkopf (12) über ein Verbindungsteil (38) mit einer axialen Reaktionskraft belastet die der vom Verriegelungsglied (32) auf den Zahnkranz (28) des Revolverkopfes (12) ausgeübten axialen Kraft entgegengesetzt ist, wobei die axiale Lagerstelle (24) zwischen Revolverkopf (12) und Gehäuse (20) in Richtung des Revolverkopfes (12) vor dem Verriegelungsglied (32) angeordnet ist, wobei das den Fluiddruck erzeugende hydraulische Medium zwischen dem Verriegelungsglied (32) und dem Verbindungsteil (38) in einen ersten Druckraum (36) einbringbar ist und wobei das Verbindungsteil (38) das Verriegelungsglied (32) derart untergreift, daß die axiale Lagerstelle (24) sowohl im verriegelten als auch im entriegelten Zustand des Revolverkopfes (12) eine Druckbetastung erfährt, **dadurch gekennzeichnet, daß** für die Lagerung des drehbaren Revolverkopfres (12) nur eine einzige axiale Lagerstelle (24) notwendig ist, daß das Verriegelungsglied (32) zum Lösen seiner den Revolverkopf (12) verriegelnden Stellung auf selner die Verzahnung (34) aufweisenden Seite mit einem weiteren Fluiddruck in einem weiteren Druckraum (60) beaufschlagbar ist, daß gleichzeitig der auf der gegenüberliegenden Seite des Verriegelungsgliedes (32) angreifende Fluiddruck im ersten Druckraum (36) entfällt und daß die beiden Druckräume (36,60) durch das Verriegelungsglied (32) voneinander getrennt sind.

2. Werkzeugrevolver nach Anspruch 1, **dadurch gekennzeichnet, daß** das verbindungsteil (38) parallel zur Verschieberichtung des Verriegelungsgliedes (32) eine Anlagefläche (42) für die Anlage mit dem Verriegelungsglied (32) in jeder Verschiebestellung desselben aufweist.

3. Werkzeugrevolver nach Anspruch 1 oder 2, **dadurch gekennzeichnet, daß** das Verbindungsteil (38) für die Drehbewegung des Revolverkopfes (12) mit einem Antriebstell (44) zusammenwirkt, das von einem im Gehäuse (20) gelagerten Antrieb (46) antreibbar ist.

4. Werkzeugrevolver nach Anspruch 3, **dadurch gekennzeichnet, daß** das Antriebstell (44) einen mit dem Verbindungsteil (38) fest verbundenen Antriebsring (48) aufweist, der außenumfangsseitig mit einer Verzahnung (52) versehen ist, die mit der Antriebsverzahnung (54) des Antriebs (46) im Gehäuse (20) kämmt.

5. Werkzeugrevolver nach Anspruch 4, **dadurch gekennzeichnet, daß** der Antrieb ein Schneckenrad aufweist, das in einer Antriebsachse (56) senkrecht zur Drehachse (26) des Revolverkopfes (12) antreibbar mit seiner Antriebsverzahnung (54) mit der korrespondierenden Verzahnung (52) des Antriebsringes (48) kämmt.

6. Werkzeugrevolver nach einem der Ansprüche 1 bis 5, **dadurch gekennzeichnet, daß** die ein axiales Nadellager (66) aufweisende axiale Lagerstelle (24) sich zwischen Revolverkopf (12) und Gehäuseteil (62), die den Zahnkranz (30) aufweisen, befindet.

7. Werkzeugrevolver nach Anspruch 6, **dadurch gekennzeichnet, daß** zwischen den Gehäuseteilen (62) mit dem Zahnkranz (30) und Teilen des Revolverkopfes (12) ein Radiallager (70) angeordnet ist und daß diese Teile des Revolverkopfes (12) zumindest teilweise das Verbindungsteil (38) übergreifen.

## Claims

1. Tool turret having a turret head (12), which is carried by a housing (20) and which can be rotated relative to this housing (20) by means of an axial bearing point (24) and which has, at the side facing the housing interior, a toothed wheel (28) which is concentric with the axis of rotation (26) thereof and which has radially extending teeth which are aligned with the teeth of a toothed wheel (30) of the housing (20) in selectable rotation positions of the turret head (12), and having a locking element (32) which can be displaced under a fluid pressure in the direction of the axis of rotation (26) of the turret head (12) and which has a toothed wheel (34) whose radial teeth, in the locking position, engage both in the toothed wheel (28) of the turret head (12) and in the toothed wheel (30) of the housing (20) by means of the force produced by the fluid pressure, the hydraulic pressure at the same time loading the turret head (12), by means of a connecting part (38), with an axial reaction force which is counter to the axial force applied to the toothed wheel (28) of the turret head (12) by the locking element (32), the axial bearing point (24) being arranged between the turret head (12) and the housing (20) before the locking element (32) in the direction of the turret head (12), the hydraulic medium which produces the fluid pressure between the locking element (32) and the connecting part (38) being able to be introduced into a first pressure space (36), and the connecting part (38) engaging below the locking element (32) in such a manner that the axial bearing point (24) is subjected to a compression load when the turret head (12) is in both the locked state and the unlocked state, **characterised in that** only a single axial bearing point (24) is required to support the rotatable turret head (12), **in that** the locking element (32) can be acted upon at the side thereof which has the tooth arrangement (34) with another fluid pressure in another pressure space (60) in order to disengage the position thereof which locks the turret head (12), **in that** the fluid pressure acting at the opposite side of the locking element (32) decreases in the first pressure space (36) at the same time, and **in that** the two pressure spaces (36, 60) are separated from each other by the locking element (32).

2. Tool turret according to claim 1, **characterised in that** the connecting part (38) has, parallel with the displacement direction of the locking element (32), a contact face (42) to provide the contact with the locking element (32) in each displacement position thereof.

3. Tool turret according to claim 1 or claim 2, **characterised in that** the connecting part (38) co-operates, for the rotational movement of the turret head (12), with a driving element (44) which can be driven by a drive (46) supported in the housing (20).

4. Tool turret according to claim 3, **characterised in that** the driving element (44) has a driving ring (48) which is securely connected to the connecting part (38) and which is provided on the outer periphery with a tooth arrangement (52) which meshes with the driving tooth arrangement (54) of the drive (46) in the housing (20).

5. Tool turret according to claim 4, **characterised in that** the drive has a worm wheel which meshes with the corresponding tooth arrangement (52) of the driving ring (48) by means of the driving tooth arrangement (54) thereof so as to be able to be driven in a driving axis (56) perpendicular to the axis of rotation (26) of the turret head (12).

6. Tool turret according to any one of claims 1 to 5, **characterised in that** the axial bearing point (24), which has an axial needle bearing (66), is located between the turret head (12) and the housing portion (62), which have the toothed wheel (30).

7. Tool turret according to claim 6, **characterised in that** a radial bearing (70) is arranged between the housing portions (62) having the toothed wheel (30) and portions of the turret head (12), and **in that** these portions of the turret head (12) at least partially overlap the connecting part (38).

## Revendications

1. Tourelle porte-outil ayant une tourelle (12) supportée par un carter (20) et pouvant tourner par rapport à ce carter (20) sur un point d'appui (24) axial, laquelle tourelle comporte une couronne dentée (28) concentrique par rapport à son axe de rotation (26) avec des dents s'étendant radialement qui s'alignent avec les dents d'une couronne dentée (30) dans des positions de rotation de la tourelle (12) pouvant être sélectionnées, et avec une couronne dentée (34) dans le sens de l'axe de rotation (26) de la tourelle (12) au moyen d'un élément de verrouillage (32) pouvant coulisser à l'aide d'un fluide hydraulique, couronne dont les dents radiales s'engrènent dans la position de verrouillage par la force générée par la pression hydraulique aussi bien dans la couronne dentée (28) de la tourelle (12) que dans la couronne dentée (30) du carter (20), moyennant quoi, la pression hydraulique charge en même temps la tourelle (12) sur un élément de liaison (38) par une force de réaction axiale, qui est opposée à la force axiale exercée par l'élément de verrouillage (32) sur la couronne dentée (28) de la tourelle (12), moyennant quoi, le point d'appui (24) axial est disposé entre la tourelle (12) et le carter (20) dans le sens de la tourelle (12) devant l'élément de verrouillage (32), moyennant quoi, le moyen hydraulique générant la pression hydraulique entre l'élément de verrouillage (32) et l'élément de liaison (38) peut être inséré dans un premier espace de compression (36) et moyennant quoi, l'élément de liaison (38) se met en prise avec l'élément de verrouillage(32) de telle sorte que le point d'appui axial (24) est soumis à une charge de compression aussi bien à l'état verrouillé qu'à l'état déverrouillé de la tourelle (12), **caractérisé en ce que** pour le placement de la tourelle (12) rotative un seul point d'appui axial (24) est nécessaire, que l'élément de verrouillage (32) peut être alimenté par une autre pression hydraulique dans un autre espace de compression (60) pour le déblocage de sa position verrouillant la tourelle (12) sur son côté comportant la denture (34), qu'en même temps, la pression hydraulique s'appliquant sur le côté opposé de l'élément de verrouillage (32) disparaît dans le premier espace de compression (36), et que les deux espaces de compression (36, 60) sont séparés l'un de l'autre par l'élément de verrouillage (32).

2. Tourelle porte-outil selon la revendication 1, **caractérisée en ce que** l'élément de liaison (38) comporte parallèlement à la direction de coulissement de l'élément de verrouillage (32) une surface d'applique (42) pour l'installation avec l'élément de verrouillage (32) dans chaque position de coulissement de celui-ci.

3. Tourelle porte-outil selon la revendication 1 ou 2, **caractérisée en ce que** l'élément de verrouillage (38) coopère avec un élément d'entraînement (44) pour le mouvement de rotation de la tourelle (12).

4. Tourelle porte-outil selon la revendication 3, **caractérisée en ce que** l'élément d'entraînement (44) comporte un anneau d'entraînement (48) solidement relié à l'élément de liaison (38), lequel anneau est prévu avec une denture (52) sur le côté périphérique extérieur, laquelle denture s'engrène avec la denture d'entraînement (54) du mécanisme d'entraînement (46) dans le carter.

5. Tourelle porte-outil selon la revendication 4, **caractérisée en ce que** le mécanisme d'entraînement comporte une roue à vis sans fin qui s'engrène dans un axe d'entraînement (56) perpendiculaire à l'axe de rotation (26) de la tourelle (12) pouvant être entraînée par sa denture d'entraînement (54) avec la denture (52) correspondante de l'anneau d'entraînement (48).

6. Tourelle porte-outil selon la revendication 1 à 5, **caractérisée en ce que** le point d'appui (24) axial comportant un palier à aiguilles (66) axial se trouve entre la tourelle (12) et la partie de carter (62), comporte une couronne dentée (30).

7. Tourelle porte-outil selon la revendication 6, **caractérisée en ce qu'**un palier radial (70) est disposé entre les parties du carter (62) avec une couronne dentée (30) et les parties de la tourelle (12) et **en ce que** ces parties de la tourelle (12) empiètent au moins partiellement sur l'élément de liaison (38).
